# EUROPEAN PATENT SPECIFICATION

(11) **EP 2 348 877 B1**
(45) Date of publication and mention of the grant of the patent: **04.12.2013**
(21) Application number: 09782592.1
(22) Date of filing: 04.09.2009
(51) Int. Cl.: A23G 9/04, A23G 9/22, A23G 9/44

(54) **PROCESS OF MAKING A FROZEN BEVERAGE FROM A FROZEN CONFECTION WITH INCREASED SURFACE AREA AND VOIDS**
VERFAHREN ZUR HERSTELLUNG EINES GEFRORENEN GETRÄNKS AUS EINEM GEFRORENEN KONFEKT MIT VERGRÖSSERTER OBERFLÄCHE UND VERGRÖSSERTEN ZWISCHENRÄUMEN
PROCÉDÉ DE FABRICATION D UNE BOISSON GLACÉE À PARTIR D UNE CONFISERIE GLACÉE PRÉSENTANT UNE ZONE DE SURFACE ET DES VIDES AUGMENTÉS

(30) Priority: 21.10.2008 US 107236 P
(43) Date of publication of application: 03.08.2011
(73) Proprietor: Nestec S.A., 1800 Vevey (CH)
(72) Inventor: VAGHELA, Madansinh, Bakersfield, CA 93312 (US); JOSHI, Nishant Ashok, Bakersfield, CA 93311 (US); CHAN, Hoo Tung Vincent, Bakersfield, CA 93311 (US); PANYAM, Dinakar, Fremont, CA 94536 (US)
(74) Representative: Schuller, Cornelis
(86) International application number: PCT/EP2009/061435
(87) International publication number: WO 2010/046171

(56) References cited:
- WO-A1-02/100740
- WO-A1-03/104729
- WO-A2-2004/098304
- DE-A1- 3 313 938
- US-A- 3 365 304
- US-A- 4 285 490
- US-A- 5 323 691
- DATABASE WPI Week 199829 Thomson Scientific, London, GB; AN 1998-325816 XP002557816 -& JP 10 117692 A (SHIMURA E) 12 May 1998 (1998-05-12)

## Description

### FIELD OF INVENTION

The invention relates to a process of making a frozen beverage as well as to certain products which arc used in this process. The process and products utilize a frozen confection which has an increased surface area as well as voids/open spaces that facilitate easy mixing with an added liquid to form the frozen beverage.

### BACKGROUND OF THE INVENTION

Frozen beverages such as milkshakes and smoothies have become increasingly popular, and exceeded its anticipated seasonality. Currently, these frozen drinks require multiple steps of preparation before consumption. For example, a milkshake or smoothie is often prepared by mixing hand-scooped ice cream or sherbet with milk or water followed by blending using various mechanical means. While this technique is well established, it is generally conducted in fast food or restaurant establishments, and is inconvenient for a consumer at home due to the amount of equipment or effort needed to prepare a single serving.

JP 10 117692 A discloses an ice candy which is provided with a recessed part at the center of its top surface. A consumer can pour alcohol into the recessed part and stir it to drink the resulting mix of alcohol and the ice candy. However, it is not easy to actually mix the frozen candy which is present in one block with the liquid poured into the recess.

Accordingly, there remains a need in the industry for making frozen drink products that do not require extensive preparation prior to consumption, and this need is now met by the present invention.

### SUMMARY OF THE INVENTION

The invention relates in general to a method of making a frozen beverage according to claim 1. For example, the method comprises arranging a frozen confection in a container with the frozen confection not assuming the shape of the container but having a three-dimensional shape with a surface area to volume ratio higher than the same volume of frozen confection which assumes the shape of the container and a plurality of open spaces or cavities, including at least one extending through or around the frozen confection to near the bottom of the container, wherein the open spaces or cavities allow liquid to penetrate and enter into the frozen confection to facilitate mixing of the liquid and the frozen confection to form the frozen beverage.

Typically, the shape of the frozen confection is provided by extruding the frozen confection into the container. In one embodiment, a liquid can be added to the arranged frozen confection immediately after arrangement in the container with some minor stirring or shaking to form the frozen beverage. In another embodiment, the method includes hardening the frozen confection shape and packaging the container and shape for storage and transport so that the frozen beverage can be made at a later time upon demand by the addition of a liquid. The frozen confection generally has a viscosity of 150 to 300 N sec/m² prior to hardening so that it is able to maintain its shape. The shape is usually extruded at a temperature of from -4°C to -17°C, and then hardened at a temperature of from -20 °C to -35°C

The shape is dispensed such as by extruding or spraying using multiple nozzles to achieve the desired configuration, e.g., a rosette, a swirl, a strand, or another pattern. Also, the open spaces of the frozen confection may include one or more cavities oriented in a central portion of the shape and preferably extending all the way to the container bottom to facilitate entry of liquid therein. Advantageously, the frozen confection has a surface area to volume ratio 1.5 to 5 fold higher than the same volume of frozen confection which assumes the shape of the container. If desired, additives or inclusions may be provided in the frozen confection or in the container to enhance the functionality or organoleptic properties of the frozen beverage that is prepared.

The types of frozen confection that are suitable for use in the inventive methods include a conventional ice cream, sorbet, sherbet, or frozen water-ice; or modified ice creams formulated to be more concentrated with sweetness and flavor than a conventional ice cream. The frozen confection is typically aerated to an overrun of between 50% to 150% and preferably around 100%. The frozen confection comprises sugar and a hydrocolloid and optionally, one or more emulsifiers or proteins. Preferably, the frozen confection comprises sugar, a hydrocolloid, an emulsifier, dairy solids and fat.

The invention also relates to a product as described in claim 15, comprising a frozen confection in a container with the frozen confection having a three-dimensional shape with a surface area to volume ratio higher than the same volume of frozen confection which assumes the shape of the container and being arranged in the container to provide a plurality of open spaces or cavities including at least one extending through or around the frozen confection to near the bottom of the container, wherein the open spaces or cavities allow liquid to penetrate and enter into the frozen confection to facilitate mixing of the liquid and the frozen confection to form the frozen beverage. The product is packaged for storage and transport. The product may also include a spoon or straw associated with the container for use in preparing a frozen beverage by stirring after the addition of a liquid to the container. The frozen confection, container and optionally the spoon or straw are packaged together to facilitate transport and sale.

The use of these products for the preparation of a frozen beverage is disclosed. To make the frozen beverage by the method of by use of the products, a liquid is added to the container; and the liquid and frozen confection are mixed by stirring with a spoon or straw for less than one minute to form the frozen beverage. Due to the fact that the surface area is sufficiently large to facilitate stirring, and sufficiently open to allow the liquid to penetrate and enter into the shape to facilitate mixing of the liquid and the frozen confection, minimal effort is needed to prepare the frozen beverage. Suitable liquids include water, milk, fruit juice, a fruit syrup, coffee, tea, or an alcoholic beverage and the necessary stirring can be achieved in less than a minute or two by mixing with a simple implement such as a spoon or a straw.

### BRIEF DESCRIPTION OF THE DRAWINGS

The invention will be better understood in relation to the attached drawings illustrating preferred embodiments, wherein:
**FIG. 1** illustrates a nozzle arrangement used in preparing a rosette product in a cup;
**FIGs. 2A** and **2B** show frozen confections in a rosette shape, highlighting the increased surface area that is exposed as a result of using the nozzle filling method;
**FIG. 3** shows a cup with the rosette shape sliced in half to reveal the interior channels that allow milk to disperse quickly in the frozen product; and
**FIG. 4** shows an amount of milk added to rosette shape and cup of FIG. 3, wherein the milk has filled the voids and spaces of the rosette shape.

### DETAILED DESCRIPTION OF THE INVENTION

The invention relates to a process of preparing a frozen beverage such as milkshake and smoothie, in a rapid and convenient manner, with a simple addition of a liquid into a container housing a frozen confection which has an increased surface area and open spaces or porosity. The surface area is greater than that of the same volume of ice confection when it is packed in the container or present in the container as one or more scoops or boules, the latter being the usual starting point for making a frozen beverage such as a milkshake in the consumer's home. The invention avoids the messiness and difficulty in mixing compared to the use of such scoops and boules, as well as the avoidance of the use of high intensity electronic mixing devices. Furthermore, due to the ease of mixing of the liquid with the ice confection shape, spilling during mixing, stiffness of the initial ice confection and an end product having separated ice confection lumps and unmixed liquid portions is avoided. The inability to have similar uniform viscosity and coldness is also avoided. The increased surface area and open spaces or cavities facilitate the mixing of a liquid with the frozen confection without the use of mechanical mixers or blenders. This is particularly useful when a single serving of such beverage is desired as simple mixing with a spoon or by shaking the container with the liquid and shaped ice confection therein is all that is required to make the frozen beverage.

To facilitate easy mixing with the liquid to form the frozen beverage, the frozen confection does not assume the shape of the container. Instead, it has aesthetically pleasing three-dimensional shape that provides an increased surface area as well as voids/open spaces. One or more nozzles having dies of specific shapes can be used to extrude the frozen confection to produce the desired shape. The shape should have an increased surface area to volume ratio and a sufficient porosity due to the presence of voids and/or air pockets to facilitate easy mixing with the liquid to form the frozen beverage. This is easily achieved when the product has an overrun of 50 to 150% due to the use of such nozzles with the incorporation of the appropriate emulsifiers therein.

The shape of the frozen confection is preferably provided by extrusion through multiple nozzles with dies of specific shapes at normal ice cream extrusion temperatures, i.e. -4°C to -17°C. The types of suitable shapes exiting the nozzle can vary over a wide range and can include cylindrical shapes (i.e., strands), generally cylindrical shapes that have irregularities, such as raised portions (e.g., swirls such as the shape of whipped cream that is provided by an aerosol dispenser or the shape of cake frosting decorations), or other shapes, such as flowers, rosettes, or the like. The skilled artisan knows how to select the appropriate types of extrusion nozzles to achieve these shapes so no further description is required here.

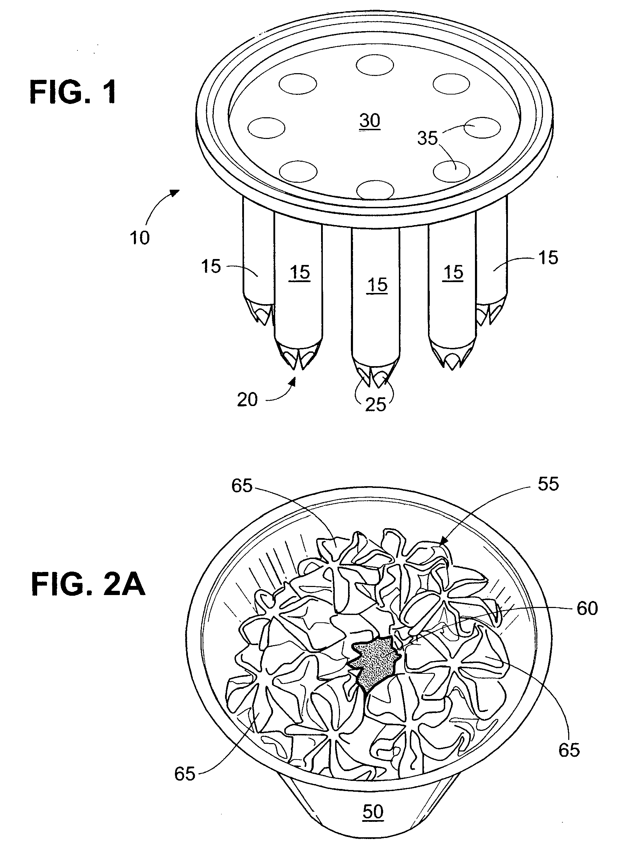

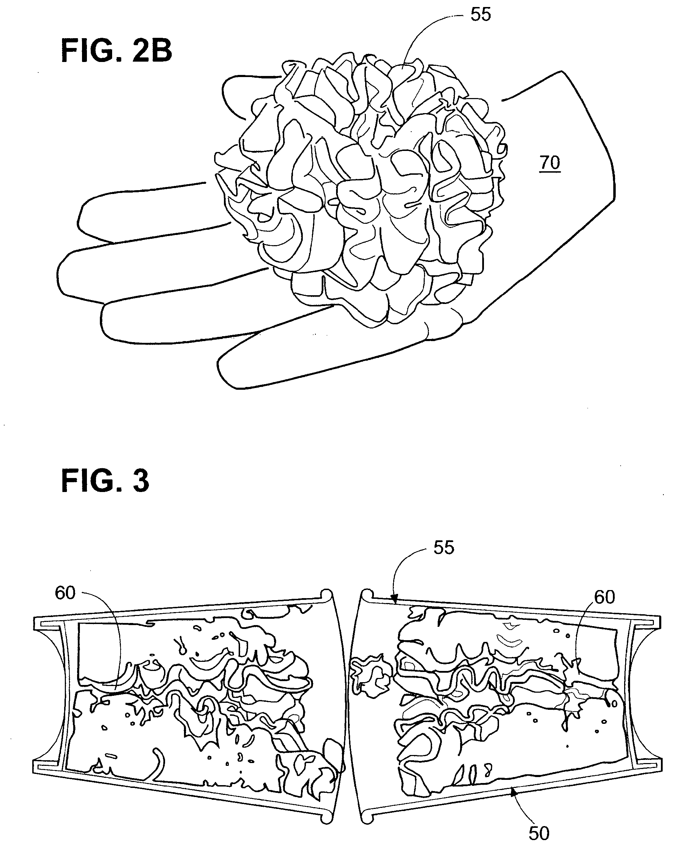

A specifically preferred nozzle arrangement 10 is shown in **FIG. 1****.** This arrangement includes a cluster of eight spaced nozzles 15 each having a star shaped tip 20 with faceted edges 25 that each create a star shaped foam of the ice confection in a manner similar to that obtainable from whipped cream that is dispensed from a pressurized container. The nozzle arrangement 10 includes a base 30 for connection to the outlet of an ice confection extruder or a similar dispensing device (not shown). The nozzles 15 are mounted on the base such that the ice confection enters the nozzles 15 through respective apertures 35. For the necessary strength and performance characteristics, as well as to facilitate manufacture of the nozzle arrangement 10, a material such as stainless steel is used. Other metals, or in some cases engineering plastics, can be used depending upon the specific design of the nozzle or nozzle arrangement 10. The nozzle arrangement 10 shown in **FIG. 1** can prepare the rosette patterns shown in **FIGs. 2A****,** **2B** and 3.

In **FIG. 2A****,** the result of spraying the ice confection into a cup 50 is shown, with the shape of the ice confection assuming a rosette pattern 55 that includes many open areas and voids or air pockets that later facilitate mixing of the frozen confection with a liquid. Also, as shown, the shape has a generally central opening 60 that is provided due to the spacing of the nozzles 15 in the nozzle arrangement 10. The opening extends all the way to the bottom of the container. Multiple openings can be used and in that situation, less deep openings can be provided. These opening(s) as well as the other voids or air pockets are present to provide sufficient volume to enable the liquid to contact the ice confection so that a frozen beverage can be easily and simply prepared. A nozzle arrangement as shown is capable of achieving the desired spacing to facilitate contact of the liquid with the ice confection. Each nozzle 15 provides a star shaped deposit 65 with eight deposits provided in total, one from each nozzle 15 of the nozzle arrangement 10. The deposits 65 are irregular with the spaces between them creating the voids and air pockets. Of course, the number of specific nozzles and their spacing can be varied as desired to achieve the necessary shape that can receive the liquid and make it easier to mix compared to a solid or other shape having a lesser surface area.

**FIG. 2B** shows the rosette pattern 55 dispensed into a person's hand 70 to show how the outer portion of the shape appears. The irregularities in the surface of the star shaped deposits 65 that create the desired voids and air pockets are more clearly shown in this figure. Of course, other uniform or non-uniform openings or spaces can be provided to achieve the same degree of contact between the liquid and the ice confection.

**FIG. 3** further shows the voids and air pockets when the shape is present in a cup or container. In this figure, a cup 50 filled with the rosette pattern 55 is cut in half after the ice confection is dispensed therein and is frozen. The central opening 60 forms a channel that enables the liquid to penetrate into the pattern 55 and to the bottom of the container 50.

Other nozzles and shapes can be used. When strands are used, multiple strands can be arranged in a non-regular or random patterns so that open spaces or voids are provided for the liquid. The thickness of the strands can also be selected for optimum formation of a "bird nest" type structure that again has multiple open spaces for entry of liquid. Other types of cavities or open spaces are useful since in each case the liquid is able to penetrate into the shape and contact the frozen confection in a manner that facilitates formation of the frozen beverage with a minimum amount of mixing. Typically, the open volume around or through the ice confection represents about 25% to 80% and preferably 40 to 65% of volume of the container. After mixing of the liquid and ice confection, the resulting frozen beverage product has a homogeneous and uniform consistency without lumps of ice confection and unmixed liquid portions. This enables the product to be prepared upon demand as desired by the consumer with minimum effort.

After arranging or forming the frozen confection shape in the container, the shape is hardened at -20°C to -35°C. The unique shape of the frozen confection results in an surface area to volume ratio and porosity 1.5 to 5 fold higher than that of the same volume of frozen confection assuming the shape of the container as a result of conventional filling method. Since the liquid can easily penetrate through the frozen confection of the invention, the preparation of a frozen beverage can be completed in less than a few minutes and often in less than a minute. In contrast, when a container is filled with the frozen confection such that the flat top surface is the only surface area, the liquid needs at least 3 to 5 minutes before reaching the bottom of the container. Even if scoops or boules of frozen confection are used, at least a few minutes are need for the liquid to be mixed with the frozen confection. Furthermore, the amount of force or energy needed to achieve this mixing is greater than that of the present invention. Such traditional method of preparation is not only difficult but also messy. For example, there is usually spill during mixing. Also the end product is often stiff, with lumps and liquid portions, which make it impossible to achieve similar uniform viscosity and coldness.

The stiffness or viscosity of the frozen confection after extrusion depends on the composition of the frozen confection as well as the extrusion temperature. Preferably, the viscosity of the frozen confection is in the range of 150 to 300 N sec/m², which is the normal range for ice cream products between -5.5°C and -7°C. At this range of viscosity, the frozen confection holds its three-dimensional shape without collapsing before hardening so that it does not assume the shape of the container. The resulting product is then rapidly cooled to the hardening temperatures of -20°C to -35°C. This treatment further increases the percentage of frozen water in the product from approximately 40-60% to 70-95%, thereby ensuring that the frozen confection maintains its shape and spatial dimensions through the cold distribution chain until preparation by the consumer.

The frozen confection preferably has distinct shapes such as rosettes, swirls, strands, or other regular patterns that display a unique visual appearance. In another embodiment, the open portions of the frozen confection form one or more central cavities so that the liquid can access to center of the frozen product t o further speed up the mixing process. Inclusions such as pieces of fruits, nuts, cereal, cookies or candies may be provided in the cavity to increase the organoleptic properties of the frozen beverage. Of course, it is also possible to provide the inclusions in the frozen confection itself if the inclusions are sufficiently small to pass through extrusion nozzles. The skilled artisan can best decide how to provide inclusions in the product.

Preferably, the frozen confection has an overrun of 50-150% for easy mixing with the liquid. When the frozen confection is a fruit-based sherbet, specific emulsifiers such as polyglycerol ester (PGE), other dairy solids or fat may be included to achieve a desirable overrun. When the frozen confection is an ice cream, it may be appropriately more concentrated with sweeteners and flavor than the normal ice cream recipe so that the frozen beverage achieves a desirable level of sweetness and flavor after the frozen confection has been mixed with the liquid. The frozen confection may further comprises sugar and hydrocolloid.

The container for housing the frozen confection can be a cup or other vessel which is used both for transport and storage of the frozen confection as well as for preparing the frozen beverage. The container can be of any suitable single serving size. Typically, the container will be able to accommodate a 355 ml (12 ounce) milkshake or smoothie product, but other container sizes such as those that can hold 118, 237, 473 or 592 ml (4, 8, 16 or 20 ounces) of product can be used. Typical materials for the container are treated paper, paperboard, plastics, paper-plastic laminates, metal foils, paper-foil composites, or any other material that is used for holding fluids or beverages. The shape of cup is not critical and conventional cylindrical shapes are entirely suitable. Generally, styrofoam is suitable and is the preferred material for the container from a cost and availability standpoint.

As noted herein the cup can include a spoon or straw associated therewith for use in mixing the liquid with the frozen confection. The straw can be of the type that has a widened open dent that acts as a spoon while the hollow tubular body allows to beverage to be consumed by sucking action. The spoon or straw can be attached to the cup and packaged therewith so that everything is provided for making the frozen beverage except for the liquid. This enables the consumer to prepare a frozen beverage on demand just by the simple addition and mixing of the desired liquid.

In some situations, the frozen beverage can be made immediately after arranging the frozen confection in the container. This would be used in a food service or fast food establishment where the nozzles would form part of an ice cream dispenser and the frozen confection is dispensed directly into a cup and the liquid is later added to form the frozen beverage. It also could be used in a self-serve setting and would allow the customer to select different liquids to add to the frozen confection to form a beverage of choice.

In other situations, such as for home use, the frozen confection and container are packaged for transport to a retail establishment, the consumer would purchase the product, transport it home and maintain it in the freezer until a frozen beverage is desired. Various packagings can be used. The frozen confection and container can be wrapped or sealed with, treated paper, plastic, paper-plastic laminates, metal foils, paper-foil composites, or any other material suitable for this purpose. The sealed container can be further packaged in a paper or cardboard box or carrying case for transport between manufacturing, sales and consumer home locations where it is maintained under refrigeration temperatures used for ice creams. After the product is brought home by the consumer, it can be stored in the freezer until use. At that time, the product would be retrieved from the freezer, a liquid added and the frozen beverage formed as disclosed herein.

In a preferred embodiment, the liquid is added into the container that holds the frozen confection, and the spoon, straw or similar simple utensil is used to mix the ingredients. Preferably, the spoon or straw that is provided with the cup is used for this purpose. The amount of liquid would generally vary from about 20 to 75% and preferably 35% to 60% of the total weight of the frozen confection and the liquid. The specific liquid and frozen confection selected, along with the resulting desired thickness of the frozen beverage would contribute to the variation of the amount of liquid added. It is expected that a skilled artisan can easily determine the preferred amount of liquid to be used through routine tests.

Various combinations of frozen beverages can be achieved by the use of appropriate frozen confection and liquid combinations. The frozen confection can be made with any one of a number of different flavors of ice cream, sherbets, sorbets, water ice or the like, including low fat or light varieties. Generally, fluids such as water, whole milk, chocolate milk, skim milk or the like can be used to obtain a milkshake while a fruit juice can be used to obtain a smoothie or slush product. Preferably, the fruit juices to be used are made of natural ingredients obtained from a fruit, vegetable or edible plant by crushing, squeezing or related operations. These juices may be filtered, strained, passed through a sieve, resin beds, clay or diatomaceous earth bed or filters, or ion exchange resins to give a juice, a juice concentrate, purees, and so-called modified juices. Specific types of juices which can be utilized in the present invention include fruit juice, concentrated fruit juice, fruit puree, fruit puree concentrate, modified juices, as well as modified concentrated juices and the like. Modified juices, for instance, would include ion exchange treated and/or ultrafiltered juices, or deodorized and decolorized ones. Examples of a few of the many specific juices which can be utilized in the product of the invention include, for example, peach concentrate, pear concentrate, blackberry puree, cranberry juice, apple concentrate, white grape juice, orange juice concentrate, grape concentrate, lemon juice concentrate, apple juice concentrate, etc. Of course, many other types of juices whether in the form of a puree, concentrate, or a juice can be utilized, depending upon the desired end flavor.

In addition to the frozen confection, the container may also include other components. As noted herein, pieces of fruits, nuts, cereal, cookies or candies can be included in the container for increasing the organoleptic properties of the frozen beverage. It is also possible to have these items sprinkled on the surface of the frozen confection instead of being present in the frozen confection or deposited in a cavity of the frozen confection shape. For example, these pieces can be provided in a separate container or in the lid compartment of the container and added to the frozen beverage just prior to consumption.

If desired, the liquid itself can include the necessary flavorants or colorants to achieve the desired flavor or color of the frozen beverage. These flavorants or colorants can be in the liquid that is to be added or multiple liquids, one of milk or juice, a separate flavorant liquid and/or a separate colorant liquid can be added depending upon the desired properties of the final product. Alternatively, the flavorants or colorants can be added after the frozen beverage is formed and then combined therein by use of a spoon or straw. This enables a partially colored or flavored product to be formed if desired.

For certain frozen beverages, small amounts of various flavor enhancers or modifiers; generally food grade acids, can be utilized to impart tartness, enhance flavor, prevent oxidation of the ingredients or the like. For example, citric acid and other organic acids such as malic acid may be utilized to impart tartness or accentuate the flavor of the mixture. These are generally present in the liquid but if necessary can be included with the frozen confection. Also, to prevent oxidation, ascorbic acid can be utilized.

### EXAMPLES

The following examples illustrate preferred embodiments of the invention.

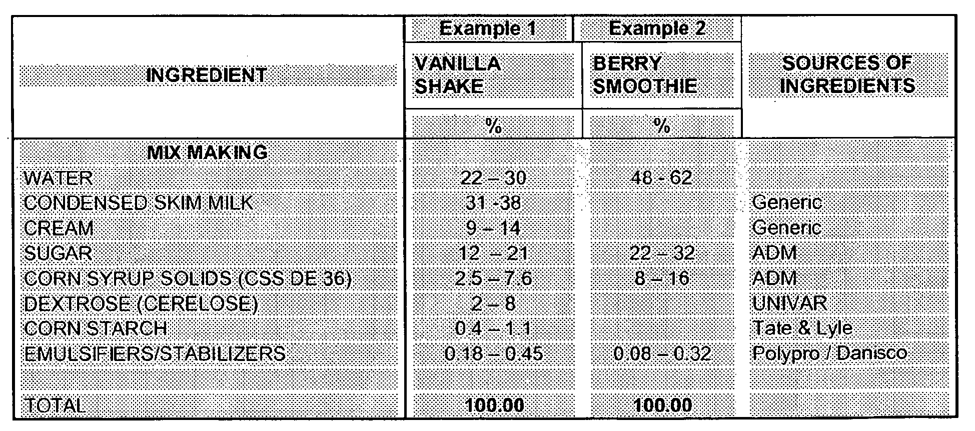

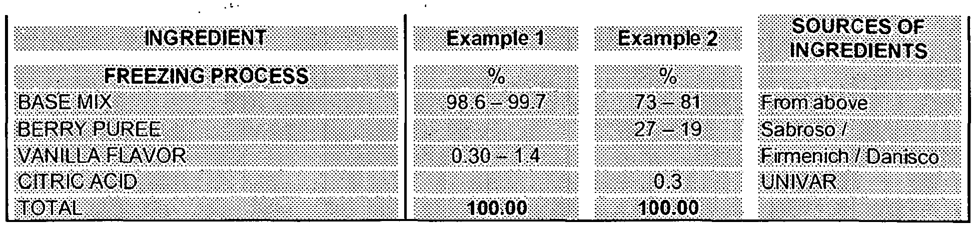

Wherever appropriate, a foam stabilizing agent was used to create and maintain a finely dispersed foam. Typical foaming agents like Polyglcerol ester (PGE) or sugar esters, protein hydrolysates, caseinate, whey protein, egg white powder etc could used as required in small quantities not exceeding 1.5% by weight. It was also determined to be advantageous to use an emulsifier like polyglycerol monostearate in certain specific recipes.

### Procedure for making the frozen confection composition:

### Mix preparation:

A liquefier was filled with appropriate amount of water, to which sugar, corn syrup and dextrose were added with constant mixing. Requisite emulsifiers and stabilizers were added and further mixed for about 5 minutes followed by liquid ingredients like milk and cream.

The pre-mix was pasteurized using standard HTST (High Temperature Short Time method) using a typical thermal regime of 83.3 °C (182 °F) for 60 seconds or equivalent.

The pasteurized mix was then cooled to 4.4 °C (40 °F) and stored till used.

### Freezing and Filling Procedure:

Flavors and colors were added prior to freezing in a standard closed dasher type ice cream freezer. Overrun was achieved by incorporating air under pressure. The mix was simultaneously frozen until the required viscosity and temperature were achieved.

The semi- frozen product from the freezer was extruded through specific nozzle configuration arranged at the end of the exit pipe from the freezer. Filling line pressure is typically about 172.4 kPa (25 psig).

Multiple nozzles, typically eight per filling head, were arranged such that an aesthetically pleasing appearance was consistently achieved in the cup in which the product was filled. The internal diameter of each nozzle is about 9.8 mm.

### Comparative Example

To illustrate the advantages conferred by increasing the surface area on easy mixing of liquid with the frozen product of the invention, another cup of the same size was filled with the same ice confection except without using the nozzle arrangement 10. This ice confection assumed the shape of the container and exhibited a relatively flat surface exposed at the top of the confection. When a volume of milk was added to the product in the cup, the milk formed a separate layer that remained on the top of the frozen surface.

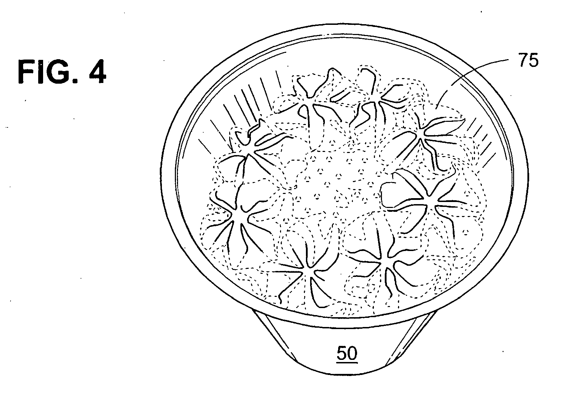

In comparison, when the same quantity of milk was added to a cup containing the frozen product in the shape of the rosette pattern 55 as shown in **FIG. 2A****,** the milk quickly penetrated and dispersed into the shape due to the voids and air pockets that were provided, all the way through to the bottom of the container, as shown in **FIG. 4****,** with only the peaks of the rosette pattern 75 still being visible. This penetration of the ice confection by the liquid facilitates mixing and formation of the frozen beverage.

After adding milk to the ice confection having the rosette shape, the combination was stirred gently with a spoon, and it soon transformed into a smooth milkshake in approximately 25-40 seconds. In contrast, when milk was added to the extruded ice confection made without the rosette pattern and mixed, it took more than 2 minutes of vigorous mixing before the liquid and frozen solid could be combined into a frozen beverage, and even there, the appearance of this product was lumpy and not as uniform or smooth as in the case of the product made with the rosette pattern.

## Claims

1. A method of making a product to form a frozen beverage, which comprises arranging a frozen confection in a container, with the frozen confection having
an extruded, free-standing, three-dimensional shape with a surface area to volume ratio higher than that of a frozen confection which has the same composition and the same volume but assumes the shape of the container, and
non-uniform open spaces or cavities at least partially surrounding the three-dimensional structure of the frozen confection and located between the frozen confection and container sidewall, and at least one non-uniform cavity located in a central portion of and extending through the three-dimensional structure of the frozen confection to near the bottom of the container,
wherein the open spaces or cavities are configured and arranged to allow liquid to penetrate and enter into the open spaces or cavities of the frozen confection to facilitate mixing of the liquid and the frozen confection to form the frozen beverage.

2. The method of claim 1, wherein the frozen confection is aerated to an overrun of between 50% to 150%.

3. The method of claim 1, wherein the frozen confection has a surface area to volume ratio 1.5 to 5 fold higher than that of a frozen confection which has the same composition and the same volume but assumes the shape of the container.

4. The method of claim 1, which further comprises providing additives or inclusions in the frozen confection or in the container to enhance the functionality or organoleptic properties of the frozen beverage that is prepared.

5. The method of claim 1, wherein the shape of the frozen confection is provided by extruding the frozen confection through one or more nozzles into the container.

6. The method of claim 5, which further comprises hardening the frozen confection shape and packaging the container and shape for storage and transport.

7. The method of claim 6, wherein the frozen confection has a viscosity of 150 to 300 N sec/m² prior to hardening at a temperature of from -4°C to -17°C, and maintains its shape during hardening.

8. The method of claim 6, wherein the frozen confection is extruded at a temperature of from -4°C to -17°C, and is hardened at a temperature of from -20 °C to -35°C.

9. The method of claim 6, wherein the frozen confection is extruded using multiple nozzles, and is a rosette, a swirl, a strand, or another pattern.

10. The method of claim 1, wherein the open space of the frozen confection includes one or more cavities oriented in a central portion of the shape and extending to the container bottom to facilitate entry of liquid therein.

11. The method of claim 1, wherein the frozen confection is one or more of the following:
a conventional ice cream, sorbet, sherbet, or frozen water-ice; or
an ice cream formulated to be appropriately more concentrated with sweetness and flavor than a conventional ice cream.

12. The method of claim 1, wherein the frozen confection comprises sugar and a hydrocolloid and optionally, one or more emulsifiers or proteins.

13. The method of claim 1, wherein the frozen confection comprises sugar, a hydrocolloid, a polyglycerol ester (PGE) emulsifier, a dairy solid or fat.

14. The method of claim 1 which further comprises:
adding a liquid to the container; and
mixing the liquid and the frozen confection by stirring with a spoon for less than one minute to form the frozen beverage.

15. A product comprising a frozen confection in a container with the frozen confection having
an extruded, free-standing, three-dimensional shape with a surface area to volume ratio higher than that of a frozen confection which has the same composition and the same volume but assumes the shape of the container, and
being arranged in the container to provide non-uniform open spaces or cavities at least partially surrounding the three-dimensional structure of the frozen confection and located between the frozen confection and container sidewall, and at least one non-uniform cavity located in a central portion of and extending through the three-dimensional structure of the frozen confection to near the bottom of the container,
wherein the open spaces or cavities are configured and arranged to allow liquid to penetrate and enter into the open spaces or cavities of the frozen confection to facilitate mixing of the liquid and the frozen confection to form the frozen beverage, wherein the product is packaged for storage and transport.

## Patentansprüche

1. Verfahren zur Herstellung eines Produkts zur Bildung eines gefrorenen Getränks, das die Anordnung eines gefrorenen Konfekts in einem Behälter umfasst, wobei das gefrorene Konfekt Folgendes aufweist:
eine extrudierte, freistehende, dreidimensionale Form mit einem größeren Flächen-Volumen-Verhältnis als dem eines gefrorenen Konfekts, das dieselbe Zusammensetzung und dasselbe Volumen aufweist, aber die Form des Behälters annimmt, sowie
ungleichförmige Freiräume oder Hohlräume, die zumindest teilweise den dreidimensionalen Aufbau des gefrorenen Konfekts umgeben und sich zwischen dem gefrorenen Konfekt und der Behälterseitenwand befinden, und mindestens einen ungleichförmigen Hohlraum, der sich in einem mittigen Abschnitt des dreidimensionalen Aufbaus des gefrorenen Konfekts befindet und sich durch diesen hindurch bis in die Nähe des Behälterbodens erstreckt,
wobei die Freiräume oder Hohlräume so ausgestaltet und angeordnet sind, dass Flüssigkeit in die Freiräume oder Hohlräume des gefrorenen Konfekts eindringen und eintreten kann, um das Vermischen der Flüssigkeit mit dem gefrorenen Konfekt zur Bildung des gefrorenen Getränks zu vereinfachen.

2. Verfahren gemäß Anspruch 1, wobei das gefrorene Konfekt bis zu einem Aufschlag von 50% bis 150% belüftet wird.

3. Verfahren gemäß Anspruch 1, wobei das gefrorene Konfekt ein Flächen-Volumen-Verhältnis aufweist, das 1,5 bis 5 mal so groß ist wie das eines gefrorenen Konfekts, das dieselbe Zusammensetzung und dasselbe Volumen aufweist, aber die Form des Behälters annimmt.

4. Verfahren gemäß Anspruch 1, das weiterhin das Vorsehen von Zusätzen oder Einschlüssen in dem gefrorenen Konfekt oder in dem Behälter umfasst, um die Funktionsfähigkeit oder die organoleptischen Eigenschaften des zubereiteten gefrorenen Getränks zu verbessern.

5. Verfahren gemäß Anspruch 1, wobei die Form des gefrorenen Konfekts dadurch bereitgestellt wird, dass das gefrorene Konfekt durch eine oder mehrere Düsen in den Behälter extrudiert wird.

6. Verfahren gemäß Anspruch 5, das weiterhin das Härten der Form des gefrorenen Konfekts und das Verpacken des Behälters und der Form für die Lagerung und den Transport umfasst.

7. Verfahren gemäß Anspruch 6, wobei das gefrorene Konfekt eine Viskosität von 150 bis 300 N sec/m² vor dem Härten bei einer Temperatur von -4°C bis -17°C aufweist und seine Form während des Härtens beibehält.

8. Verfahren gemäß Anspruch 6, wobei das gefrorene Konfekt bei einer Temperatur von -4°C bis -17°C extrudiert wird und bei einer Temperatur von -20°C bis -35°C gehärtet wird.

9. Verfahren gemäß Anspruch 6, wobei das gefrorene Konfekt unter Verwendung von mehreren Düsen extrudiert wird und eine Rosette, einen Wirbel, einen Strang oder ein anderes Muster darstellt.

10. Verfahren gemäß Anspruch 1, wobei der Freiraum des gefrorenen Konfekts einen oder mehrere Hohlräume aufweist, die in einem mittigen Abschnitt der Form ausgerichtet sind und sich zu dem Behälterboden erstrecken, um den Eintritt von Flüssigkeit in diese zu vereinfachen.

11. Verfahren gemäß Anspruch 1, wobei das gefrorene Konfekt aus einem oder mehreren der folgenden besteht:
einer herkömmlichen Eiscreme, einem Sorbet, Fruchteis oder gefrorenem Wassereis; oder
einer Eiscreme, die mit einer geeigneten Rezeptur so hergestellt ist, dass sie konzentriertere Süße und konzentrierteres Aroma enthält als herkömmliche Eiscreme.

12. Verfahren gemäß Anspruch 1, wobei das gefrorene Konfekt Zucker und ein Hydrokolloid sowie wahlweise einen oder mehrere Emulgatoren oder Proteine enthält.

13. Verfahren gemäß Anspruch 1, wobei das gefrorene Konfekt Zucker, ein Hydrokolloid, einen Emulgator aus Polyglycerinester (PGE), einen Milchfeststoff oder Fett enthält.

14. Verfahren gemäß Anspruch 1, weiterhin mit den Schritten:
Zugeben einer Flüssigkeit in den Behälter, und
Vermischen der Flüssigkeit mit dem gefrorenen Konfekt durch Umrühren mit einem Löffel über weniger als eine Minute zur Bildung des gefrorenen Getränks.

15. Produkt mit einem gefrorenen Konfekt in einem Behälter, wobei das gefrorene Konfekt
eine extrudierte, freistehende, dreidimensionale Form mit einem Flächen-Volumen-Verhältnis aufweist, das größer ist als das eines gefrorenen Konfekts, welches dieselbe Zusammensetzung und dasselbe Volumen aufweist, aber die Form des Behälters annimmt, und
in dem Behälter so angeordnet ist, dass es ungleichförmige Freiräume oder Hohlräume bildet, die zumindest teilweise den dreidimensionalen Aufbau des gefrorenen Konfekts umgeben und sich zwischen dem gefrorenen Konfekt und der Behälterseitenwand befinden, und mindestens einen ungleichförmigen Hohlraum, der sich in einem mittigen Abschnitt des dreidimensionalen Aufbaus des gefrorenen Konfekts befindet und sich durch diesen hindurch bis in die Nähe des Behälterbodens erstreckt,
wobei die Freiräume oder Hohlräume so ausgestaltet und angeordnet sind, dass Flüssigkeit in die Freiräume oder Hohlräume des gefrorenen Konfekts eindringen und eintreten kann, um das Vermischen der Flüssigkeit mit dem gefrorenen Konfekt zur Bildung des gefrorenen Getränks zu vereinfachen, wobei das Produkt für die Lagerung und den Transport verpackt ist.

## Revendications

1. Procédé de fabrication d'un produit pour former une boisson congelée, qui comprend l'agencement d'une confiserie congelée dans un récipient, la confiserie congelée présentant
une forme en trois dimensions autoportante extrudée avec un rapport surface sur volume supérieur à celui d'une confiserie congelée qui présente la même composition et le même volume mais prend la forme du récipient, et
des espaces ouverts ou cavités non uniformes entourant au moins partiellement la structure en trois dimensions de la confiserie congelée et situés entre la confiserie congelée et une paroi latérale du récipient, et au moins une cavité non uniforme située dans une partie centrale de la structure en trois dimensions de la confiserie congelée et s'étendant à travers celle-ci pour approcher le fond du récipient,
dans lequel les espaces ouverts ou cavités sont configurés et agencés pour permettre à du liquide de pénétrer et d'entrer à l'intérieur des espaces ouverts ou cavités de la confiserie congelée afin de faciliter le mélange du liquide et de la confiserie congelée pour former la boisson congelée.

2. Procédé selon la revendication 1, dans lequel la confiserie congelée est aérée à un foisonnement compris entre 50% et 150%.

3. Procédé selon la revendication 1, dans lequel la confiserie congelée présente un rapport surface sur volume 1,5 à 5 fois supérieur à celui d'une confiserie congelée qui présente la même composition et le même volume mais prend la forme du récipient.

4. Procédé selon la revendication 1, qui comprend en outre le fait de fournir des additifs ou inclusions dans la confiserie congelée ou dans le récipient pour améliorer la fonctionnalité ou les propriétés organoleptiques de la boisson congelée qui est préparée.

5. Procédé selon la revendication 1, dans lequel la forme de la confiserie congelée est assurée par extrusion de la confiserie congelée à travers une ou plusieurs buses dans le récipient.

6. Procédé selon la revendication 5, qui comprend en outre le durcissement de la forme de la confiserie congelée et le conditionnement du récipient et de la forme pour le stockage et le transport.

7. Procédé selon la revendication 6, dans lequel la confiserie congelée présente une viscosité de 150 à 300 N sec/m² avant le durcissement à une température de -4 °C à - 17 °C, et conserve sa forme pendant le durcissement.

8. Procédé selon la revendication 6, dans lequel la confiserie congelée est extrudée à une température de -4 °C à -17 °C, et est durcie à une température de -20 °C à -35 °C.

9. Procédé selon la revendication 6, dans lequel la confiserie congelée est extrudée en utilisant de multiples buses, et représente une rosette, un tourbillon, un brin, ou un autre motif.

10. Procédé selon la revendication 1, dans lequel l'espace ouvert de la confiserie congelée comprend une ou plusieurs cavités orientées dans une partie centrale de la forme et s'étendant vers le fond du récipient pour faciliter l'entrée de liquide dedans.

11. Procédé selon la revendication 1, dans laquelle la confiserie congelée correspond à un ou plusieurs des éléments suivants:
une crème glacée conventionnelle, sorbet, jus de fruits congelé, ou glace à l'eau congelée ; ou
une crème glacée élaborée pour être de façon appropriée plus concentrée en goût sucré et en arôme qu'une crème glacée conventionnelle.

12. Procédé selon la revendication 1, dans lequel la confiserie congelée comprend du sucre et un hydrocolloïde et, facultativement, un ou plusieurs émulsifiants ou protéines.

13. Procédé selon la revendication 1, dans lequel la confiserie congelée comprend du sucre, un hydrocolloïde, un émulsifiant d'ester de polyglycérol (PGE), une matière solide laitière ou de la matière grasse.

14. Procédé selon la revendication 1, qui comprend en outre:
l'ajout d'un liquide au récipient; et
le mélange du liquide et de la confiserie congelée par agitation avec une cuillère pendant moins d'une minute pour former la boisson congelée.

15. Produit comprenant une confiserie congelée dans un récipient, la confiserie congelée présentant
une forme en trois dimensions autoportante extrudée avec un rapport surface sur volume supérieur à celui d'une confiserie congelée qui présente la même composition et le même volume mais prend la forme du récipient, et
étant agencée dans le récipient pour fournir des espaces ouverts ou cavités non uniformes entourant au moins partiellement la structure en trois dimensions de la confiserie congelée et situés entre la confiserie congelée et une paroi latérale du récipient, et au moins une cavité non uniforme située dans une partie centrale de la structure en trois dimensions de la confiserie congelée et s'étendant à travers celle-ci pour approcher le fond du récipient,
dans lequel les espaces ouverts ou cavités sont configurés et agencés pour permettre à du liquide de pénétrer et d'entrer à l'intérieur des espaces ouverts ou cavités de la confiserie congelée afin de faciliter le mélange du liquide et de la confiserie congelée pour former la boisson congelée, le produit étant conditionné pour le stockage et le transport.
